# EUROPÄISCHE PATENTSCHRIFT

(11) **EP 1 314 362 B1**
(45) Veröffentlichungstag und Bekanntmachung des Hinweises auf die Patenterteilung: **02.02.2005**
(21) Anmeldenummer: 02026187.1
(22) Anmeldetag: 25.11.2002
(51) Int. Cl.: A23L 1/29, A23L 1/03, A23L 1/337, A23L 1/305

(54) **Diätetisches Lebensmittel**
Dietary foodstuff
Aliment diététique

(30) Priorität: 24.11.2001 DE 20119176 U
(43) Veröffentlichungstag der Anmeldung: 28.05.2003
(73) Patentinhaber: SAMADHI BIOCYBERNETICS GmbH, 50374 Erftstadt (DE)
(72) Erfinder: Ewald, Martin, Prof, 50374 Erfstadt (DE)
(74) Vertreter: Jönsson, Hans-Peter, Dr.

(56) Entgegenhaltungen:
- FR-E- 95 866
- DATABASE WPI Section Ch, Week 199810 Derwent Publications Ltd., London, GB; Class D13, AN 1998-108609 XP002230936 -& RO 112 230 B (CENT CERC TEHNOLOGII ECOLOGICE), 30. Juli 1997 (1997-07-30)
- DATABASE WPI Section Ch, Week 198730 Derwent Publications Ltd., London, GB; Class D13, AN 1987-210568 XP002230321 & JP 62 138151 A (SNOWDEN KK), 20. Juni 1987 (1987-06-20)
- DATABASE WPI Section Ch, Week 200153 Derwent Publications Ltd., London, GB; Class D13, AN 2001-483687 XP002230322 & CN 1 166 297 A (BAYI HEALTH FOOD FACTORY CHANGZHOU), 3. Dezember 1997 (1997-12-03)
- DATABASE WPI Section Ch, Week 199943 Derwent Publications Ltd., London, GB; Class D13, AN 1999-509061 XP002230323 & CN 1 220 101 A (CHANGJIANG BIOENGINEERING PROD FACTORY), 23. Juni 1999 (1999-06-23)

## Beschreibung

Die vorliegende Erfindung betrifft ein diätetisches Lebensmittel.

Diätetische Lebensmittel sind Lebensmittel, die für eine besondere Ernährung bestimmt sind. Entsprechende Lebensmittel sind an besondere Ernährungserfordernisse angepaßt. Einzelheiten hierzu sind in der Verordnung über diätetische Lebensmittel (DiätVO), veröffentlicht im Bundesgesetzblatt BGBI I, Seite 1713, zuletzt geändert durch Gesundheitseinrichtung-Neuordnungs-Gesetz vom 24.06.1994 (BGBI I, Seite 1416, 1420) enthalten.

In der Diätverordnung sind auch diätetische Lebensmittel definiert, die zur Verwendung als Mahlzeit oder anstelle einer Mahlzeit oder als Tagesration für Übergewichtige bestimmt sind. Diese dürfen zum einen einen gewissen physiologischen Brennwert nicht überschreiten, auf der anderen Seite müssen gewisse Gehalte an Eiweiß, essentiellen Fettsäuren und verwertbaren Kohlenhydraten sowie Vitamin- und Mineralstoffen eingehalten werden.

Als Eiweißquelle dienen überwiegend tierische Eiweiße, beispielsweise Molkenproteine und Milcheiweiß.

Extrakte und sprühgetrocknete Pulver der Alge Spirulina, beispielsweise von Spirulina platensis können ohne weitere Bearbeitung in unveränderter Form verwendet werden.

WO 87/00731 beschreit die Herstellung eines Nahrungsergänzungsmittels auf der Basis von Extrakten der Alge Spirulina. Auf die Beschreibung dieser Druckschrift wird voll umfänglich Bezug genommen.

Aus EP 0 504 508 B1/DE 691 17 168 T2 ist ein Pulver aus grünen Pflanzensäften und ein Verfahren zu seiner Herstellung bekannt, das ebenfalls Extrakte der Alge Spirulina enthält.

In der DE 196 44 343 A1 werden geschmacksneutrale Mikrokapseln als Lebensoder Futtermittelzusätze beschrieben.

RO112230 B1 beschreitt eine Süßspeise mit Spirulinapulves oder -paste.

Auf diesem Wege lassen sich hohe Gehalte an Spurenelementen in ein diätetisches Nahrungsmittel einbringen. Wird als Proteinquelle ausschließlich Spirulina verwendet oder nur zusammen mit weiteren pflanzlichen Proteinquellen handelt es sich um ein Lebensmittel, das auch von Vegetariern akzeptiert wird. Darüber hinaus werden Allergien gegen das tierische Eiweiß verhindert. Allerdings sind hochkonzentrierte Spriulina-Extrakte praktisch nicht genießbar.

Erfindungsgemäß wird daher ein diätetisches Lebensmittel mit einem physiologischen Brennwert von bis zu 1675 kJ, insbesondere 700 bis 1675 kJ, einem Gehalt an Eiweiß von mindestens 25 Gramm, insbesondere 25 bis 50 Gramm, einem Gehalt an essentiellen Fettsäuren, berechnet als Linolsäure, von mindestens 3 Gramm, insbesondere 3 bis 20 Gramm, einem Gehalt von insbesondere physiologisch verwertbaren Kohlenhydraten von mindestens 20 Gramm, insbesondere 20 bis 60 Gramm bereitgestellt, das dadurch gekennzeichnet ist, dass das diätetische Lebensmittel 1 bis 50 Gew.-Teile Extrakte der Alge Spirulina, jeweils bezogen auf 100 Gramm enthält. In vorteilhafter Weise sind die Extrakte in Form von sprühgetrockneten Pulvern.

Das erfindungsgemäße Produkt, das neben Spirulina-Extrakten weitere Bestandteile enthält, hat eine hohe Bioverfügbarkeit und ist leicht resorbierbar.

Spirulina muss zur Verwendung in dem erfindungsgemäßen Lebensmittel zunächst aufbereitet werden. Dabei sind grundsätzlich alle Verfahren geeignet, die das lösliche Eiweiß aufschließen. Ein geeignetes Verfahren umfasst das in WO 87/00731 beschriebene Verfahren: Kochen der Alge in einer wässrigen Lösung für 10 bis 15 Minuten, Zusatz von Enzymen zum enzymatischen Aufschluss und Abtrennung der löslichen Substanzen beispielsweise durch Zentrifugation. Der erhaltene Niederschlag kann dann mit Alkohol extrahiert werden, um unerwünschte Substanzen zu entfernen. Der Rückstand enthält etwa 83 % Protein, bis zu 11 % Kohlenhydrate und bis zu 3 % Fett sowie Vitamine.

Entsprechende Spirulina-Extrakte sind kommerziell beispielsweise von der Firma ExtraktChemie, Stadthagen als Pulver erhältlich. Diese sind jedoch als solche nicht genießbar. Erfindungsgemäß werden diese mit pflanzlichen und/oder tierischem Eiweiß, Kohlenhydraten und essentiellen Fettsäuren angereichert, um ein diätetisches Lebensmittel zur vollständigen Ernährung zu geben.

Bevorzugt enthält das erfindungsgemäße Lebensmittel 1 bis 5 Gew.-Teile Spirulina-Extrakt.

In einer weiteren Ausführungsform der Erfindung ist das Lebensmittel dadurch gekennzeichnet, dass das Eiweiß ausgewählt ist aus Sojaeiweiß (Soyamin) und/oder Milcheiweiß.

In einer weiteren bevorzugten Ausführungsform ist das Lebensmittel dadurch gekennzeichnet, dass die Kohlenhydrate ausgewählt sind aus Fructose, Innulin und/oder Maltrodextrose.

Das erfindungsgemäße Lebensmittel kann in Form eines Pulvers zum Auflösen/Dispergieren in Flüssigkeit angeboten werden.

In einer bevorzugten Ausführungsform wird das erfindungsgemäße Lebensmittel jedoch in Form einer Kautablette angeboten. Bevorzugt werden für eine Mahlzeit mehrere Kautabletten vorgesehen, die jeweils Einzelgewichte von 1,5 bis 5 Gramm, vorzugsweise 2 bis 3,5 Gramm Gewicht aufweisen. Sie können rund, oval oder in Kapselform gepresst sein. Hierbei ist besonders vorteilhaft, dass durch den Kauvorgang Enzyme in der Mundschleimhaut freigesetzt werden, die für die Verdauung der Produkte wichtig sind. Darüber hinaus entsteht durch das Kauen auch ein Sättigungsgefühl.

Gegenstand der Erfindung ist auch ein Produkt, das aus einer oder mehreren Portionen des erfindungsgemäßen Lebensmittels besteht.

### Beispiele

### Beispiel 1:

Das erfindungsgemäße Produkt kann beispielsweise wie folgt zusammengesetzt sein.

| | |
|---|---|
| Sojaeiweiß (Soyamin 90 SP) | 25,00 g |
| Spirulinapulver | 20,00 g |
| Kohlenhydrat-(Fructose) | 20,00 g |
| Kohlenhydrat-(Maltodextrin) | 12,00 g |
| Sonnenblumenöl | 9,00 g |
| Erbsenkleie | 5,50 g |
| Vitamine u. Mineralstoffe | 8,50 g |

Die Zusammensetzung enthielt folgende Vitamine, Mineralstoffe und Spurenelemente:

| | Pro 100 g |
|---|---|
| Vitamin A | 500 µg |
| Vitamin D | 3,8 µg |
| Vitamin E | 7,14 mg |
| Vitamin C | 32,14 mg |
| Vitamin B₁ | 0,81 mg |
| Vitamin B₂ | 1,14 mg |
| Vitamin B₆ | 1,1 mg |
| Niacin | 12,85 mg |
| Folsäure | 0,14 mg |
| Vitamin B₁₂ | 1,01 µg |
| Biotin | 10,95 µg |
| Pantothensäure | 2,14 mg |
| Calcium | 500 mg |
| Kalium | 1809,5 mg |
| Phosphor | 393 mg |
| Eisen | 11,21 mg |
| Zinkoxid | 8,6 mg |
| Kupfersulfat | 1,19 mg |
| Jod | 92,86 µg |
| Selen | 39,3 µg |
| Natrium | 417 mg |
| Magnesium | 131 mg |
| Mangan II Sulfat | 0,72 mg |
| | |

### Beispiel 2:

Das erfindungsgemäße Produkt kann beispielsweise wie folgt zusammengesetzt sein.

| | |
|---|---|
| Molkenprotein | 40,00 g |
| Spirulinapulver | 2,00 g |
| Kohlenhydrat-(Fructose) | 25,00 g |
| Kohlenhydrat-(Maltodextrin) | 10,00 g |
| Sonnenblumenöl | 9,00 g |
| Erbsenkleie | 5,50 g |
| Vitamine u. Mineralstoffe | 8,50 g |

## Patentansprüche

1. Diätetisches Lebensmittel mit
■ einem physiologischen Brennwert von 700 bis 1675 kJ,
■ einem Gehalt an Eiweiß von 25 bis 50 Gramm,
■ einem Gehalt an essentiellen Fettsäuren, berechnet als Linolsäure von 3 bis 20 Gramm,
■ einem Gehalt an physiologisch verwertbaren Kohlenhydraten von 20 bis 60 Gramm,
**dadurch gekennzeichnet, dass** diätetische Lebensmittel
■ 1 bis 50 Gew.-Teile Extrakte der Alge Spirulina, jeweils bezogen auf 100 Gramm enthält.

2. Lebensmittel nach Anspruch 1, **dadurch gekennzeichnet, dass** es 1 bis 5 Gew.-Teile Extrakte der Alge Spirulina, jeweils bezogen auf 100 Gramm enthält.

3. Lebensmittel nach Anspruch 1 oder 2, **dadurch gekennzeichnet, dass** das Eiweiß ausgewählt ist aus Sojaeiweiß und/oder Milcheiweiß.

4. Lebensmittel nach einem der Ansprüche 1 bis 3, **dadurch gekennzeichnet, dass** die Kohlenhydrate ausgewählt sind aus Fructose, Innulin und/oder Maltrodextrose.

5. Lebensmittel nach einem der Ansprüche 1 bis 4 in Form eines Pulvers.

6. Lebensmittel nach einem der Ansprüche 1 bis 5 in Form einer Kautablette.

7. Lebensmittel nach Anspruch 6, **dadurch gekennzeichnet, dass** die Kautablette rund, oval oder kapselförmig gepresst ist.

## Claims

1. A dietary foodstuff with
- a physiological caloric value of from 700 to 1675 kJ;
- a protein content of from 25 to 50 grams;
- a content of essential fatty acids, calculated as linolic acid, of from 3 to 20 grams;
- a content of physiologically utilizable carbohydrates of from 20 to 60 grams;
**characterized in that** said dietary foodstuff contains
- from 1 to 50 weight parts of extracts from *Spirulina* algae, respectively based on 100 grams.

2. The foodstuff according to claim 1, **characterized by** containing from 1 to 5 weight parts of extracts from *Spirulina* algae, respectively based on 100 grams.

3. The foodstuff according to claim 1 or 2, **characterized in that** said protein is selected from soybean protein and/or milk protein.

4. The foodstuff according to any of claims 1 to 3, **characterized in that** said carbohydrates are selected from fructose, inulin and/or maltodextrose.

5. The foodstuff according to any of claims 1 to 4 in the form of a powder.

6. The foodstuff according to any of claims 1 to 5 in the form of a chewable tablet.

7. The foodstuff according to claim 6, **characterized in that** said chewable tablet has been compressed into circular, oval or capsule shape.

## Revendications

1. Aliment diététique, présentant
- une valeur calorifique physiologique de 700 à 1675 kJ,
- une teneur en protéides de 25 à 50 g,
- une teneur en acides gras essentiels, calculés sous la forme d'acide linoléique, de 3 à 20 g,
- une teneur en hydrates de carbone physiologiquement utilisables de 20 à 60 g,
**caractérisé en ce que** l'aliment diététique contient
- 1 à 50 parties en poids d'extraits de l'algue Spirulina, respectivement par rapport à 100 g.

2. Aliment suivant la revendication 1, **caractérisé en ce qu'**il contient 1 à 5 parties en poids d'extraits de l'algue Spirulina, respectivement par rapport à 100 g.

3. Aliment suivant l'une des revendications 1 et 2, **caractérisé en ce que** le protéide est choisi parmi du protéide de soja et/ou du protéide de lait.

4. Aliment suivant l'une des revendications 1 à 3, **caractérisé en ce que** les hydrates de carbone sont choisis parmi du fructose, de l'inuline et/ou du maltodextrose.

5. Aliment suivant l'une des revendications 1 à 4, sous la forme d'une poudre.

6. Aliment suivant l'une des revendications 1 à 5, sous la forme d'un comprimé à mâcher.

7. Aliment suivant la revendication 6, **caractérisé en ce que** le comprimé à mâcher est pressé sous une forme ronde, ovale ou de capsule.
